Europäisches Patentamt

European Patent Office

Office européen des brevets

(19)

(11) Publication number : **0 469 859 A1**

# EUROPEAN PATENT APPLICATION

(12)

(21) Application number : **91306980.3**

(22) Date of filing : **30.07.91**

(51) Int. Cl.⁵ : **C08L 95/00**

(30) Priority : **31.07.90 FR 9009765**

(43) Date of publication of application :
**05.02.92 Bulletin 92/06**

(84) Designated Contracting States :
**FR GB**

(71) Applicant : **ESSO SOCIETE ANONYME FRANCAISE**
**6, Avenue André Prothin**
**F-92499 Courbevoie (FR)**

(72) Inventor : **Soury, Marie-Pierre**
**62 Rue Saint Hilaire**
**F-76000 Rouen (FR)**

(74) Representative : **Fletcher Watts, Susan J. et al**
**ESSO Engineering (Europe) Ltd. Patents & Licences Mailpoint 72 Esso House Ermyn Way Leatherhead, Surrey KT22 8XE (GB)**

(54) **Bitumen compositions.**

(57)   A bitumen composition containing 3 to 25 wt.% of a highly aromatic cracked petroleum product having a specific gravity from 0.92 to 1.06 at 15°C, an atmospheric boiling range lying within 180 to 370°C and a kinematic viscosity from 0.5 to 5 cSt at 100°C. The composition also preferably contains 2 to 15 wt.% of a copolymer consisting essentially of ethylene and a comonomer selected from vinyl acetate, alkyl acetate or alkyl methacrylate. The presence of the highly cracked petroleum product improves the low temperature elongation properties of the bitumen composition.

EP 0 469 859 A1

This invention relates to bitumen compositions, more especially, although not exclusively, to bitumen compositions for use in roadmaking and road surface dressing.

Bitumen occurs both as a natural material and as a product of the distillation of crude oil (where bitumen is also referred to as asphalt). Typically bitumen from crude oil is derived from the bottoms of a vacuum distillation tower and has an atmospheric boiling point of at least 380°C. Because it is hydrophobic and has good adhesiveness and weatherability, bitumen has been widely used as a binder in road surface materials as well as in other applications such as roofing.

With the advent of more and heavier traffic on the roadways, there is an increased demand for bitumen compositions with improved mechanical properties such as resistance to creep (flow), and better elongation, especially at low temperatures. To improve their performance, bitumens have been modified by the addition of certain polymers. For example, copolymers of ethylene and an ester such as vinyl acetate or methylmethacrylate have been added to improve the creep resistance of the bitumen. However, these bitumen compositions suffer the disadvantage that they have poor elongation properties, especially at low temperatures, when they are liable to crack.

US Patent 4,105,612 describes bitumen compositions containing ethylene-vinyl acetate copolymer to improve the elasticity of the composition, a terpenic resin to improve its cohesion and adhesion properties, and a minor proportion of syntower bottoms to improve its thermal stability and brightness. The syntower bottoms are the still bottoms obtained in the distillation of the effluent from a fluid catalytic cracking (FCC) process.

We have found that the low temperature properties of bitumen compositions can be significantly improved by incorporating certain petroleum products into the composition. Accordingly the present invention provides a bitumen composition comprising bitumen and from 3 to 25% by weight based on the total weight of the composition, of a highly aromatic cracked petroleum product having a specific gravity from 0.92 to 1.06 at 15°C, an atmospheric boiling range lying within 180 to 370°C preferably 190 to 350°C, more preferably 190 to 340°C, a kinematic viscosity from 0.5 to 5 cSt preferably 0.5 to 1.5 cSt at 100°C.

The incorporation of the highly aromatic petroleum product is especially beneficial when the bitumen composition includes copolymers such as ethylene-vinyl acetate, ethylene-methyl methacrylate and/or ethylene-alkyl acrylate. Therefore in a preferred embodiment the present invention provides a bitumen composition comprising, by weight based on the total weight of the composition :

(a) 64 to 95% bitumen;

(b) 2 to 15% of a copolymer consisting essentially of ethylene and a comonomer selected from vinyl acetate, alkyl acrylate or alkyl methacrylate; and

(c) 3 to 25% of a highly aromatic cracked petroleum product having a specific gravity from 0.92 to 1.06 at 15°C, an atmospheric boiling range lying within 180 to 370°C and a kinematic viscosity from 0.5 to 5 cSt at 100°C.

The bitumen composition according to the invention has the advantage that it exhibits good elongation properties, particularly at low temperatures, whilst retaining the other good mechanical properties associated with bitumen compositions containing the said copolymers, for example resistance to creep.

The highly aromatic cracked petroleum product typically has an aromatic content of at least 90, usually at least 95%, and often at least 98% or more by weight. The balance generally comprises other hydrocarbons and some polar compounds such as sulphur-containing and nitrogen-containing compounds. The petroleum product is preferably a middle to heavy fraction resulting from the steam cracking of petroleum fractions from the distillation of crude oil. Examples of suitable cracked petroleum products are steam cracker quench oil, and steam cracker gas oil. Steam cracker quench oil is a relatively heavy fraction and typically has a specific gravity from 1.01 to 1.06 at 15°C, an atmospheric boiling range lying within 210 to 350°C and a kinematic viscosity from 0.9 to 1.2 cSt at 100°C. Steam cracker gas oil is a relatively light fraction and typically has a specific gravity from 0.92 to 1.0 at 15°C, an atmospheric boiling range lying within 190 to 230°C and a kinematic viscosity from 0.6 to 0.8 cSt at 100°C.

The amount of the highly aromatic cracked petroleum product incorporated in the bitumen composition should be from 5 to 25 wt%, preferably 5 to 20 wt%, and more preferably 5 to 16 wt%.

The bitumen employed in the composition may be obtained from a variety of sources including straight-run vacuum residue; mixtures of vacuum residue with diluents such as vacuum tower wash oil, paraffin distillate, aromatic and naphthenic oils and mixtures thereof; oxidised vacuum residues or oxidised mixtures of vacuum residues and diluent oils and the like. Other bituminous materials such as coal tar pitch, rock asphalt and naturally occurring bitumens may be used. Typically, the bitumen will have an atmospheric boiling point of at least 380°C, an ASTM penetration (mm/10) from 20 to 300, preferably 100 to 300, most preferably 150 to 200, at 25°C, a softening point (Ring and Ball) from 30 to 55°C, preferably 35 to 45°C, and a kinematic viscosity from 100 to 1000 cSt, preferably 150 to 750 cSt, more preferably 150 to 250 cSt, at 135°C. A mixture of two or more different bitumens may be used. Preferably the composition according to the invention contains from 64 to 95 wt% bitumen, more preferably 70 to 90 wt%, and especially 85 to 90 wt%.

The copolymer employed in the bitumen composition preferably comprises ethylene and from 3 to 45 wt%, preferably 20 to 35 wt%, based on the weight of the copolymer, of a comonomer selected from vinyl acetate, alkyl acrylate or alkyl methacrylate. The copolymer typically has a melt index from 0.3 to 100, preferably 0.5 to 50 g/10 min. Where the comonomer is alkyl acrylate or alkyl methacrylate, the alkyl group is preferably a lower alkyl group, for example methyl, ethyl or butyl. Especially preferred comonomers are vinyl acetate and methyl methacrylate. The amount of copolymer employed in the composition is preferably 2 to 15 wt%, more preferably 4 to 8 wt% based on the total weight of the composition. A mixture of two or more of these ethylene based copolymers may be used if desired.

The bitumen composition may contain other additives, if desired, but preferably it does not contain a resin, especially a terpenic resin. Resins such as terpenic resin have the disadvantage that they tend to reduce the thermal stability of the composition. The bitumen composition of the invention has the advantage that it provides beneficial properties without having to include resin in the composition.

The bitumen composition may be prepared by conventional bitumen mixing techniques. Typically the mixing temperature is in the range of 150 to 200°C, and the mixing time 30 minutes to 2 hours. Preferably the highly aromatic cracking petroleum product is added after the incorporation of any polymer such as the above-mentioned ethylene copolymers.

If desired, a fluxant may be incorporated into the bitumen composition. A fluxant decreases the viscosity of the bitumen composition and makes it easier to apply, for example in road surfacing applications. Preferably, the fluxant is a petroleum fluxant, and kerosene has been found to be especially preferred.

Although the highly aromatic cracked petroleum product may also act as a fluxant, it is generally preferred to limit the amount of this cracked product to that which provides sufficient improvement in low temperature elongation for the required application, and to obtain the desired viscosity of the bitumen composition by adding conventional fluxant, such as kerosene. In general, an elongation of above 200% at the specified low temperature is regarded a sufficient elongation. The amount of fluxant incorporated into the composition (in addition to the highly aromatic cracked petroleum product) varies depending on the circumstances, for example, the desired viscosity and the amount of cracked petroleum product present, but is generally between zero and 20 wt%, preferably 5 to 10 wt%.

The bitumen composition of the invention may be used in applications conventionally requiring a bituminous binder material, for example immersion coating, roof waterproofing and joint fillers/sealants. However the composition is particularly beneficial for use in roadmaking and repairing, especially road surface dressings and where the bitumen composition is typically applied to the road surface in the form of a hot mix.

The invention will now be illustrated by the following Examples.

Example 1 (Comparative)

A bitumen composition containing 95 wt% bitumen of penetration grade 180/220 and having a penetration of 188 mm/10 at 25°C, and 5 wt% ethylene methyl methacrylate ("EMA") having a melt index of 1.1 and containing 24 wt% methyl acrylate comonomer was prepared. The bitumen was blended with the EMA at 180°C for 1.5 hours using a conventional mixer.

The properties of the resulting EMA modified bitumen were measured and are given in Table 1.

Example 2

To the bitumen composition of Example 1 was blended 16 wt% steam cracker quench oil ("SCQO"). The SCQO had a specific gravity of about 1.02 at 15%C, a boiling range of 210-350°C and a kinematic viscosity of 1.0 cSt at 100°C. The composition was blended using conventional mixing techniques at a temperature of 140°C for 1.5 hours. A sample of the resulting composition was formed into a thin film and aged for 14 days at 50°C to stabilise the amount of SCQO contained in the composition and thus simulate aging when used as a road surface dressing binder.

The properties of the resulting SCQO/EMA modified bitumen were measured and are given in Table 1. When compared with the EMA modified bitumen of Example 1 containing no SCQO, it can be seen that the elongation is significantly improved, especially at lower temperatures (-10°C) at which the elongation of the SCQO-containing bitumen composition is greater than 400%, whereas the elongation of the bitumen composition containing no SCQO is zero.

Example 3

To the bitumen composition of Example 1 was blended 11 wt% steam cracker gas oil ("SCGO"). The SCGO had a specific gravity of about 0.95 at 15°C, a boiling range of 190-230°C and a kinematic viscosity of 0.67 cSt at 100°C. The blending was carried out using conventional mixing techniques at a temperature of 140°C for 1.5 hours. A sample of the resulting composition was formed into a thin film and aged for 14 days at 50°C to stabilise the amount of SCGO contained in the composition and thus simulate aging when used as a road surface dressing binder.

The properties of the resulting SCGO/EMA modified bitumen were measured and are given in Table 1. It can be seen from the results that incorporation of SCGO into an EMA modified bitumen significantly enhances the elongation properties, especially at lower temperatures (-10°C) where the elongation is greater than 400%.

## TABLE 1

| Example No. | 1 Comparative | 2 16% SCQO | 3 11% SCGO |
|---|---|---|---|
| R & B Softening Point (°C) | 58 | 58 | 57 |
| Fraass Point (°C) | -24 | -27 | -23 |
| Penetration at 25°C (mm/10) | 90 | 171 | 105 |
| Max elongation at -5°C | 350% | >400% | >400% |
| Max elongation at -10°C | 0% | >400% | >400% |

Examples 4-6

Example 2 was repeated except that the amount of SCQO was adjusted to 5, 8 and 10 wt% respectively. A sample of each resulting composition was formed into a thin film and aged as described in Example 2. The properties of the compositions are given in Table 2.

## TABLE 2

| Example No. | 4 5% SCQO | 5 8% SCQO | 6 10% SCQO |
|---|---|---|---|
| R & B Softening Point (°C) | 57 | 57 | 61 |
| Fraass Point (°C) | -22 | -24 | -19 |
| Penetration at 25°C (mm/10) | 113 | 116 | 72 |
| Max elongation at -10°C | 370% | 380% | 378% |

When compared with Example 2 in Table 1, the results show that, although maximum elongation at low temperatures is achieved with higher proportions of SCQO in the bitumen composition (16% SCQO gives >400% elongation), a considerable improvement in elongation can still be achieved by incorporating smaller amounts of SCQO into the composition (5% SCQO gives 370% elongation whereas Example 1 containing no SCQO had an elongation of zero at -10°C).

Examples 7-9

Example 2 was repeated except that the amount of SCQO incorporated into the composition was 10 wt%, and the type of copolymer was varied for each Example as follows :

Example 7 : ethylene vinyl acetate having a melt index of 2g/10 min and containing 20 wt% vinyl acetate comonomer ("EVA 1").

Example 8 : ethylene vinyl acetate having a melt index of 45g/10 min and containing 33 wt% vinyl acetate comonomer ("EVA 2").

Example 9 : ethylene vinyl acetate having a melt index of 3g/10 min and containing 28 wt% vinyl comonomer ("EVA 3").

A sample of each resulting composition was formed into a thin film and aged as described in Example 2. The properties of each composition are given in Table 3.

## TABLE 3

| Example No. | 7<br>EVA 1 | 8<br>EVA 2 | 9<br>EVA 3 |
|---|---|---|---|
| R & B Softening Point (°C) | 61 | 41 | 46 |
| Fraass Point (°C) | -19 | -20 | -23 |
| Penetration at 25°C (mm/10) | 76 | 107 | 89 |
| Max elongation at -10°C | 226% | 385% | 306% |

The results show that very good low temperature elongation properties are obtained by incorporating a highly aromatic cracked petroleum product, such as SCQO, into a bitumen composition modified with EVA, as well as when modified with EMA, which is the copolymer used in the previous examples.

Examples 10-11

Example 2 was repeated except that the amount of SCQO was reduced and kerosene fluxant was blended into the composition after the addition of the SCQO. The amounts of SCQO and fluxant were varied for each Example as follows :

Example 10 : 5 wt% SCQO + 7.5 wt% kerosene

Example 11 : 8 wt% SCQO + 4.5 wt% kerosene

The weight percentages are based on the total weight of the bitumen composition.

The viscosities of the resulting compositions were measured, and then a sample of each composition was formed into a thin film and aged as described in Example 2.

The properties of the resulting SCQO/EMA/kerosene modified bitumen were measured and the results given in Table 4.

## TABLE 4

| Example No. | 10 | 11 |
|---|---|---|
| Viscosify before aging (cSt) | 133 | 128 |
| R & B Softening Point (°C) | 60 | 60 |
| Fraass Point (°C) | - 19 | - 20 |
| Penetration at 25°C (mm/10) | 65 | 72 |
| Max elongation at -10°C | 400% | 277% |

**Claims**

1. A bitumen composition comprising bitumen and from 3 to 25% by weight based on the total weight of the composition, of a highly aromatic cracked petroleum product having a specific gravity from 0.92 to 1.06 at 15°C, an atmospheric boiling range lying within 180 to 370°C and a kinematic viscosity from 0.5 to 5 cSt at 100°C.

2. A bitumen composition comprising, by weight based on the total weight of the composition :
   (a) 64 to 95% bitumen;
   (b) 2 to 15% of a copolymer consisting essentially of ethylene and a comonomer selected from vinyl acetate, alkyl acrylate or alkyl methacrylate; and
   (c) 3 to 25% of a highly aromatic cracked petroleum product having a specific gravity from 0.92 to 1.06 at 15°C, an atmospheric boiling range lying within 180 to 370°C and a kinematic viscosity from 0.5 to 5 cSt at 100°C.

3. A bitumen composition according to Claim 1 or 2 wherein the highly aromatic cracked petroleum product is steam cracker quench oil.

4. A bitumen composition according to Claim 1 or 2 wherein the highly aromatic cracked petroleum product is steam cracker gas oil.

5. A bitumen composition according to any preceding claim wherein the amount of the highly aromatic cracked petroleum product in the composition is from 5 to 20 wt%.

6. A bitumen composition according to any preceding claim wherein the bitumen has a penetration from 20 to 300 mm/10 at 25°C.

7. A bitumen composition according to any preceding claim wherein the copolymer is selected from ethylene vinyl acetate or ethylene methyl methacrylate.

8. A bitumen composition according to any preceding claim which contains an additional substance that acts as a fluxant.

9. A bitumen composition according to claim 8 wherein the said additional substance is kerosene.

10. Use of a highly aromatic cracked petroleum product having a specific gravity from 0.92 to 1.06 at 15°C, an atmospheric boiling range lying within 180 to 370°C and a kinematic viscosity from 0.5 to 5 cSt at 100°C in a bitumen composition to improve the low temperature elongation properties of the composition.

**European Patent Office**

## EUROPEAN SEARCH REPORT

Application Number

EP 91 30 6980

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | FR-A-2 458 629 (MOBIL OIL CORP.)<br>* Page 3, lines 25-38; claims 1,2,3,5,13 *<br>--- | 1,2,6-8 | C 08 L 95/00 |
| A | FR-A-2 130 213 (THE BRITISCH PETROLEUM CO., LTD)<br>* Page 4, lines 9-16; claims 1,3,5,6 *<br>--- | 1,2 | |
| A | EP-A-0 162 561 (EXXON RESEARCH AND ENGINEERING CO.)<br>----- | | |
| | | | TECHNICAL FIELDS SEARCHED (Int. Cl.5) |
| | | | C 08 L |

The present search report has been drawn up for all claims

| Place of search | Date of completion of the search | Examiner |
|---|---|---|
| THE HAGUE | 14-10-1991 | CATURLA VICENTE V. |

EPO FORM 1503 03.82 (P0401)